# EUROPEAN PATENT SPECIFICATION

(11) **EP 2 940 761 B1**
(45) Date of publication and mention of the grant of the patent: **18.12.2019**
(21) Application number: 13868086.3
(22) Date of filing: 26.12.2013
(51) Int. Cl.: H01M 4/525, H01M 4/505, H01M 4/36, C01G 53/00, H01M 4/02, H01M 10/052

(54) **CATHODE ACTIVE MATERIAL FOR LITHIUM SECONDARY BATTERIES**
KATHODENAKTIVMATERIAL FÜR LITHIUM-SEKUNDÄRBATTERIE
MATÉRIAU ACTIF DE CATHODE POUR BATTERIES SECONDAIRES AU LITHIUM

(30) Priority: 26.12.2012 KR 20120153025
(43) Date of publication of application: 04.11.2015
(73) Proprietor: IUCF-HYU (Industry-University Cooperation Foundation Hanyang University), Seoul 133-791 (KR); Enerceramic Inc, Seoul 130-840 (KR)
(72) Inventor: SUN, Yang-Kook, Seoul 135-280 (KR); NOH, Hyung Joo, Bucheon-si Gyeonggi-do 420-721 (KR); YOUN, Sung Joun, Busan 617-030 (KR)
(74) Representative: J A Kemp LLP
(86) International application number: PCT/KR2013/012213
(87) International publication number: WO 2014/104759

(56) References cited:
- EP-A1- 2 405 521
- WO-A1-2006/091019
- WO-A1-2012/171780
- KR-A- 20060 060 609
- KR-A- 20060 105 039
- KR-A- 20070 097 923
- KR-A- 20120 118 435
- KR-B1- 100 274 892
- SUN Y K ET AL: "High-voltage performance of concentration-gradient Li[Ni0.67Co0.15Mn0.18]O2 cathode material for lithium-ion batteries", ELECTROCHIMICA ACTA, ELSEVIER SCIENCE PUBLISHERS, BARKING, GB, vol. 55, no. 28, 3 August 2010 (2010-08-03), pages 8621-8627, XP027433837, ISSN: 0013-4686, DOI: 10.1016/J.ELECTACTA.2010.07.074 [retrieved on 2010-08-03]

## Description

### TECHNICAL FIELD

The invention relates to a cathode active material for a lithium secondary battery, and in particular, to a a cathode active material, which is used for a lithium secondary battery and is prepared to include a mixture of particles with different particle sizes and thereby to have an improved tap density. At least one particle of the mixture of the particles is provided to have a gradient in internal concentration.

### BACKGROUND ART

With the recent rapid development of mobile communication and information electronic industries, there is an increasing demand for a lithium secondary battery with high capacity and light weight. However, increasing multi-functionality of a mobile device leads to an increase in energy consumption of the mobile device, and thus, it is necessary to increase electric power and capacity of a battery. Accordingly, many researches are conducted to improve C-rate and capacity properties of the battery. However, the C-rate and capacity properties are in a trade-off relation, and thus, in the case where, in order to improve the capacity of the battery, a loading amount or an electrode density is increased, the battery may suffer from deterioration of the C-rate property.

For a lithium secondary battery, to realize desired ionic conductivity of an active material, porosity of an electrode is needed to be maintained to a specific level or higher. In the case where, to improve the loading amount or the electrode density, the electrode is rolled to have a high reduction ratio, the porosity of the electrode may be excessively reduced, causing an abrupt reduction of the C-rate of the battery.

In the case where active materials with different particle sizes are used, a high electrode density can be achieved by an appropriate rolling process, but there may occur a reduction in porosity and C-rate properties. Therefore, in order to prepare a lithium transition metal compound, which has excellent discharging capacity, lifetime property, and C-rate property suitable for the active material, it is necessary to research and develop a technology capable of controlling a kind of the active material and sizes of the particles and preventing a reduction in tap density.

WO 2012/171780 A1 describes a lithium metal oxide powder. KR 2007 0097923A describes a positive active material. KR 2006 0105039A describes a powderous electrode active material.

### DISCLOSURE OF THE INVENTION

### TECHNICAL PROBLEM

An aspect of the present disclosure is to provide a cathode active material, which is formed to have a low porosity and an excellent C-rate, for a lithium secondary battery.

### TECHNICAL SOLUTION

The invention provides a cathode active material for a lithium secondary battery, comprising a mixture of a particle P1 with an average diameter of D1 and a particle P2 with an average diameter of D2,
wherein D1 > D2,
wherein the particle P1 and the particle P2 has a core portion and a surface portion,
wherein the core portion of the particle P1 and the particle P2 has a chemical composition represented by the following chemical formula 1,
wherein the surface portion of the particle P2 has a chemical composition represented by the following chemical formula 2,

[chemical formula 1] Liₐ₁M1ₓ₁M2_{y1}M3_{z1}M4_{w}O_{2+δ},

[chemical formula 2] Liₐ₂M1ₓ₂M2_{y2}M3_{z2}M4_{w}O_{2+δ},

and
in the chemical formulas 1 and 2, M1, M2, and M3 are selected from the group consisting of Ni, Co, Mn, and combinations thereof, M4 is selected from the group consisting of Fe, Na, Mg, Ca, Ti, V, Cr, Cu, Zn, Ge, Sr, Ag, Ba, Zr, Nb, Mo, Al, Ga, B, and combinations thereof, 0<a1≤1.1, 0<a2≤1.1, 0≤x1≤1, 0≤x2≤1, 0≤y1≤1, 0≤y2≤1, 0≤z1≤1, 0≤z2≤1, 0≤w≤0.1, 0.0≤δ≤0.02, 0<x1+y1+z1≤1, 0<x2+y2+z2≤1, x1≤x2, y1≤y2, and z2≤z1,
wherein the Ni concentration of the core portion of the particle P1 is higher than the Ni concentration of the core portion of the particle P2.

In example embodiments, the cathode active material may include a mixture of particles having different sizes, and in particular, the cathode active material may include a mixture of a particle having a uniform metal ion concentration and another particle, whose core and surface portions have different chemical compositions, or a mixture of particles, whose core and surface portions have different chemical compositions. In other words, by mixing particles with different particle sizes, it is possible to reduce porosity and increase a packing density, when an electrode is manufactured, and thus, this makes it possible to increase a tap density. Furthermore, by mixing a particle, which includes core and surface portions with different chemical compositions and has a concentration gradient therein (i.e., exhibiting not abrupt change in metal concentration, thereby having a stable crystal structure and increased thermal stability), it is possible to increase thermal stability of the cathode active material mixture.

For example, a particle having a small particle size and including core and surface portions with different chemical compositions may be provided to fill a space between particles having a large particle size and a uniform metal concentration, and in this case, the particles having the large particle size and the uniform metal concentration size may allow the cathode active material to have an overall high output property, and the particle having the small particle size and including the core and surface portions with different chemical compositions may allow the cathode active material to have improved thermal stability. Alternatively, a particle having a small particle size and including core and surface portions with different chemical compositions may be provided to fill a space between particles having a large particle size and including core and surface portions with different chemical compositions, and in this case, it is possible to realize high thermal stability and high capacity.

In example embodiments, the particle P1 may have the core portion, whose chemical composition is represented by the chemical formula 1 and the surface portion, whose chemical composition is represented by the chemical formula 2, and the diameters D1 and D2 ranges from 2 to 20 µm and satisfy a condition of D2 < D1. The particle P1 may be contained to have a weight percent of 5 to 95 with respect to a total weight of an active material.

For example, a particle having a small particle size and a uniform metal concentration may be provided to fill a space between particles having a large particle size and including core and surface portions with different chemical compositions, and in this case, the particles having the large particle size and including the core and surface portions with different chemical compositions may allow the cathode active material to have an improved thermal stability property, and the particle having the small particle size and the uniform metal concentration may allow the cathode active material to have a high output property.

In example embodiments, a cathode active material for a lithium secondary battery may include core and surface portions with different chemical compositions, and if the core and surface portions have different chemical compositions, its internal structure may not be limited to a specific example. In other words, the cathode active material may be provided to have a continuous metal concentration gradient over the entire region thereof (e.g., from the core portion of the particle to the surface portion). Alternatively, depending on thicknesses of the core and surface portions, the cathode active material may be provided to have a core-shell structure or to have a concentration gradient, which is formed in the shell portion after forming the core portion or a portion thereof.

In example embodiments, the cathode active material for a lithium secondary battery including the core portion represented by the chemical formula 1 and the surface portion represented by the chemical formula 2 is prepared in the following manner:

A thickness of the core portion ranges from 10% to 70% of a total size of the particle of the cathode active material for the lithium secondary battery.

And, the particle of the cathode active material may be provided in such a way that a concentration of metal ion from the core portion to the surface portion may be uniformly represented by the chemical formula 2. In other words, the particle of the cathode active material may be configured to have core and shell portions with a uniform concentration.

In example embodiments, in the case where a metal concentration of the cathode active material has a core-shell structure, the core portion may occupy a portion of the particle spanning from its center to a position that is spaced apart from the center by 10% to 70% of the distance from the center to the outermost surface, whereas the surface portion may occupy another portion of the particle corresponding to 90% to 30% of the distance. If the occupation ratio of the core portion is greater than 70% of the distance from the center to the outermost surface, the surface portion may be too thin to cover an uneven surface of the particle, whereas if the occupation ratio of the core portion is smaller than 10% of the distance from the center to the outermost surface, there may occur deterioration in charging/discharging capacity of the core portion and deterioration in capacity, which may be caused by cyclic operation.

In example embodiments, the cathode active material for a lithium secondary battery including the core portion represented by the chemical formula 1 and the surface portion represented by the chemical formula 2 is prepared in the following manner:

A thickness of the core portion ranges from 10% to 70 % of a total size of the particle of the cathode active material for the lithium secondary battery.

A thickness of the surface portion ranges from 1% to 5 % of the total size of the particle of the cathode active material for the lithium secondary battery.

Concentrations of M1, M2, and M3 may have continuous concentration gradients in a direction from the core portion to the surface portion.

In example embodiments, the cathode active material for a lithium secondary battery including the core portion represented by the chemical formula 1 and the surface portion represented by the chemical formula 2 is prepared in the following manner:

A thickness of the core portion and a thickness of the surface portion range from 1% to 5% of a total size of the particle of the cathode active material for the lithium secondary battery.

Concentrations of M1, M2, and M3 may have continuous concentration gradients in a direction from the core portion to the surface portion.

In example embodiments, the cathode active material for a lithium secondary battery including the core portion represented by the chemical formula 1 and the surface portion represented by the chemical formula 2 is prepared in such a way that concentrations of M1 and M2 may have continuously increasing concentration gradients in the direction from the core portion to the surface portion and the concentration of M3 may have continuously decreasing concentration gradient in the direction from the core portion to the surface portion.

That is, in example embodiments, in the case where a metal concentration of the cathode active material has a continuous concentration gradient through the entire portion of the particle spanning from the center to the surface, the M1 and M2 may have a continuously increasing concentration gradient in a direction from the core portion toward the surface portion and the M3 may have a continuously decreasing concentration gradient in the direction from the core portion toward the surface portion. Distribution of the concentration means that a change rate in metal concentration per 0.1 µm may range from 0.05 mol% to 15 mol%, preferably from 0.05 mol% to 10 mol%, and more preferably, from 0.05 mol% to 5 mol% in a region from the core portion of the particle to the surface portion. Furthermore, in example embodiments, the particle may be configured to have at least one non-vanishing concentration gradient throughout the entire portion of the particle. For example, in the entire portion of the particle spanning from the center to the surface, the particle may have a single continuously changing metal concentration gradient or two or more different metal concentration gradients.

In example embodiments, the cathode active material for a lithium secondary battery including the core portion represented by the chemical formula 1 and the surface portion represented by the chemical formula 2 is prepared in the following manner:

A thickness of the core portion and a thickness of the surface portion range from 1% to 5% of a total size of the particle of the cathode active material for the lithium secondary battery.

A concentration of M1 may be uniform in a direction from the core portion to the surface portion.

Concentrations of M2 and M3 may have continuous concentration gradients in the direction from the core portion to the surface portion.

In example embodiments, the M1 may be Co, the M2 may be Mn, and the M3 may be Ni.

In example embodiments, the M1 may be Mn, the M2 may be Co, and the M3 may be Ni.

In example embodiments, the M1 may be Ni, the M2 may be Co, and the M3 may be Mn.

In example embodiments, an electrode including the cathode active material and a lithium secondary battery including the electrode may be provided.

### ADVANTAGEOUS EFFECTS

As described above, the cathode active material according to example embodiments of the inventive concept may be prepared to include a mixture of particles with different particle sizes, and here, the mixture of particles may include a particle formed to exhibit a gradient in metal ion concentration. Accordingly, it is possible to increase a C-rate property and maintain porosity within a desired range, and thus, a cathode active material with a remarkably improved tap density can be fabricated.

### BRIEF DESCRIPTION OF THE DRAWINGS

FIG. 1 is a diagram showing measurement results of particle size analysis (PSA) on cathode active materials according to example embodiments of the inventive concept, when the cathode active materials were formed to have a variation in mixing ratio of particles.
FIG. 2 is a graph showing a relation between a tap density and a ratio of a particle mixed in the cathode active materials according to example embodiments of the inventive concept.
FIGS. 3 and 4 are diagrams showing measurement results of PSA on the cathode active material according to example embodiments of the inventive concept.

### BEST MODE FOR CARRYING OUT THE INVENTION

Example embodiments of the inventive concepts will now be described more fully with reference to the accompanying drawings, in which example embodiments are shown.

### <Preparation Example 1> Prepare a particle in such a way to have a gradient in concentration of metal ion throughout the particle

4 liter distilled water was provided in a co-precipitation reactor (having capacity of 4L and including a rotary motor with an output power of 80W or higher) and then was stirred at a speed of 1000 rpm in the reactor maintained to a temperature of 50°C.

In order to prepare a cathode active material, in which all of Mn, Co, Ni have a concentration gradient, aqueous metal salt solution (2.0 M concentration) for forming a core portion was prepared to contain nickel sulfate, cobalt sulfate, and manganese sulfate mixed in a mole ratio of 90:5:5, aqueous metal salt solution (2.0 M concentration) for forming a surface portion was prepared to contain nickel sulfate, cobalt sulfate, and manganese sulfate mixed in a mole ratio of 54:15:31, the aqueous metal salt solution for the core portion was supplied in the reactor, and then, the aqueous metal salt solution for the surface portion and the aqueous metal salt solution for the core portion were supplied at a rate of 0.3 liter/hour in the reactor and were mixed in such a way that a mixing ratio therebetween was gradually changed. Furthermore, ammonia solution (4.0 M concentration) was continuously supplied at a rate of 0.03 liter/hour into the reactor. Aqueous sodium hydroxide solution (4.0 M concentration) was supplied to adjust a pH value to, for example, 10. A speed of an impeller was controlled to 1000 rpm. A flow rate was controlled in such a way that a mean residence time of the solution in the reactor was six hours, and after the reaction reached a steady-state, solution containing precursor for a cathode active material of a lithium secondary battery was continuously obtained through an overflow pipe.

The solution containing the obtained precursor was filtered, and a water washing step was performed thereon. Thereafter, the resulting material was dried in a warm air dryer of 110 °C for 15 hours to prepare a precursor for a cathode active material of a lithium secondary battery.

The prepared precursor and lithium hydroxide (LiOH) were mixed to have a mole ratio of 1.0:1.19, and a preliminary baking was performed on the resulting material. In the preliminary baking, the resulting material was heated at a heating rate of 2°C/min and was maintained at temperature of 280°C for 5 hours. Thereafter, the resulting material was baked at temperature of 900 °C for 10 hours to prepare two types of cathode active materials, one of which had a particle size of 4 to 7µm and a tap density of 1.97g/cc and the other of which had a particle size of 10 to 14 µm and a tap density of 2.42 g/cc, for a lithium secondary battery.

### <Preparation Example 2> Prepare a shell-shaped particle in such a way to contain one metal with a uniform concentration and the remaining metals with a concentration gradient throughout the particle

In order to prepare a cathode active material, in which Mn has a fixed concentration of 25 % and Co and Ni have concentration gradients, aqueous metal salt solution (2.0 M concentration) for forming a core portion was prepared to contain nickel sulfate, cobalt sulfate, and manganese sulfate mixed in a mole ratio of 75:00:25, aqueous metal salt solution (2.0 M concentration) for forming a surface portion was prepared to contain nickel sulfate, cobalt sulfate, and manganese sulfate mixed in a mole ratio of 55:20:25, the aqueous metal salt solution for the core portion was supplied in the reactor, and then, the aqueous metal salt solution for the surface portion and the aqueous metal salt solution for the core portion were supplied at a rate of 0.3 liter/hour in the reactor and were mixed in such a way that a mixing ratio therebetween was gradually changed. The same method as that in the Preparation Example 1, except for the above differences in this process, was performed to prepare cathode active materials having a fixed Mn concentration of 25% and gradients in Co and Ni concentrations, for a lithium secondary battery. One of the cathode active materials had a particle size of 4 to 6 µm and had a tap density of 2.03 g/cc, and the other of the cathode active materials had a particle size ranging from 10 to 14 µm and had a tap density of 2.58 g/cc.

### <Preparation Example 3> Prepare a particle in such a way to have at least two different gradients in metal concentration throughout the particle

In order to prepare a cathode active material, in which Mn, Co, Ni has at least two different concentration gradients, aqueous metal salt solution (2.0 M concentration) for forming a core portion was prepared to contain nickel sulfate, cobalt sulfate, and manganese sulfate mixed in a mole ratio of 80:05:15, aqueous metal salt solution (2.0 M concentration) for forming a first surface portion was prepared to contain nickel sulfate, cobalt sulfate, and manganese sulfate mixed in a mole ratio of 70:10:20, aqueous metal salt solution (2.0 M concentration) for forming a second surface portion was prepared to contain nickel sulfate, cobalt sulfate, and manganese sulfate mixed in a mole ratio of 55:18:27, the aqueous metal salt solution for the core portion was supplied in the reactor, and then, the aqueous metal salt solution for the first surface portion and the aqueous metal salt solution for the core portion were supplied at a rate of 0.3 liter/hour in the reactor and were mixed in such a way that a mixing ratio therebetween was gradually changed, and then, the aqueous metal salt solution for the first surface portion and the aqueous metal salt solution for the second surface portion were supplied at a rate of 0.3 liter/hour in the reactor and were mixed in such a way that a mixing ratio therebetween was gradually changed. The same method as that in the Preparation Example 1, except for the above differences in this process, was performed to prepare cathode active materials having two different concentration gradients, for a lithium secondary battery. One of the cathode active materials had a particle size of 6 µm and had a tap density of 2.17 g/cc, and the other of the cathode active materials had a particle size ranging from 10 to 14 µm and had a tap density of 2.52 g/cc.

### <Preparation Example 4> Prepare a particle of a core-shell structure

In order to prepare a particle, whose core and shell portions have uniform concentrations, aqueous metal salt solution (2.0 M concentration) for forming a core portion was prepared to contain nickel sulfate, cobalt sulfate, and manganese sulfate mixed in a mole ratio of 95:00:05, aqueous metal salt solution (2.0 M concentration) for forming a shell portion was prepared to contain nickel sulfate, cobalt sulfate, and manganese sulfate mixed in a mole ratio of 40:20:40, the aqueous metal salt solution for the core portion was supplied in the reactor to form the core portion, and then, the aqueous metal salt solution for the shell portion was supplied at a rate of 0.3 liter/hour in the same reactor to prepare an active material including the core and shell portions with uniform concentrations. In the active material, a particle size ranged from 4 to 6 µm, and the particle was measured to have a tap density of 1.67 g/cc.

### <Preparation Example 5> Prepare a particle having a shell structure with a uniform concentration and having a core portion with a concentration gradient

In order to prepare a particle having a core portion with a uniform concentration and a shell portion with a concentration gradient, aqueous metal salt solution (2.0 M concentration) for forming a core portion was prepared to contain nickel sulfate, cobalt sulfate, and manganese sulfate mixed in a mole ratio of 80:05:15, aqueous metal salt solution (2.0 M concentration) for forming a shell portion was prepared to contain nickel sulfate, cobalt sulfate, and manganese sulfate mixed in a mole ratio of 35:20:45, the aqueous metal salt solution for the core portion was supplied in the reactor to form the core portion, and then, the aqueous metal salt solution for the shell portion and the aqueous metal salt solution for the core portion were supplied at a rate of 0.3 liter/hour in the reactor and were mixed in such a way that a mixing ratio therebetween was gradually changed. Accordingly, a cathode active material for a lithium secondary battery was prepared to have a particle size ranging from 4 to 6 µm and a tap density of 1.73 g/cc, and another cathode active material for a lithium secondary battery was prepared to have a particle size ranging from 11 to 14 µm and a tap density of 2.28 g/cc.

### <Preparation Example 6> Prepare a particle, in which metal ion has a uniform concentration

In order to prepare a particle containing nickel, cobalt, and manganese and having a uniform metal ion concentration, aqueous metal solution (2.0 M concentration), in which nickel sulfate, cobalt sulfate, and manganese sulfate were mixed to have a mole ratio of 60:20:20, was used to prepare an active material having a particle size of 5 µm and a particle tap density of 1.67 g/cc.

### <Preparation Example 7> Prepare a particle, in which metal ion has a uniform concentration

An NCA particle was prepared to have a particle size of 3 µm. The NCA particle was prepared in such a way that concentrations of nickel, cobalt, and aluminum therein are uniform.

### <Preparation Example 8> Prepare a particle, in which metal ion has a uniform concentration

An LCO particle having a particle size of 2 µm and a uniform cobalt ion concentration was prepared.

### <Embodiments 1 to 3>

The particle, which was prepared by the method of Preparation Example 5 to have a core portion with a uniform concentration and a shell portion with a concentration gradient, and the particles prepared by the methods of Preparation Examples 1 to 8 were mixed to each other in mixing ratios shown in the following table 1, and tap densities, electrode densities, and C-rates thereof were measured. The following Table 1 shows the results of the measurements.

**[Table 1]**

| | First particle (diameter) | Second particle (diameter) | Mixing ratio of first and second particles (wt%) | Tap density | Electrode density | C-rate (5C/0.2C) |
|---|---|---|---|---|---|---|
| Embodiment 1 | Preparation Example 5 (11µm) | Preparation Example 8 (2µm) | 70:30 | 2.46 | 2.19 | 81 % |
| Embodiment 2 | Preparation Example 5 (12µm) | Preparation Example 2 (5µm) | 85:15 | 2.72 | 2.43 | 85 % |
| Embodiment 3 | Preparation Example 5 (14µm) | Preparation Example 3 (6µm) | 90:10 | 2.79 | 2.50 | 86 % |
| Comparative example 1 | Preparation Example 8 (2µm) | | - | 1.13 | 0.96 | 80 % |
| Comparative example 3 | Preparation Example 5 (12µm) | | - | 2.28 | 2.02 | 81 % |
| Comparative example 4 | Preparation Example 5 (4µm) | | - | 1.73 | 1.51 | 84 % |
| Comparative example 6 | Preparation Example 1 (5µm) | | - | 1.97 | 1.74 | 88 % |
| Comparative example 8 | Preparation Example 2 (5µm) | | - | 2.03 | 1.79 | 87 % |
| Comparative example 10 | Preparation Example 3 (6µm) | | - | 2.17 | 1.91 | 89 % |

Table 1 shows that, by mixing the particle having a core portion with a uniform concentration and a shell portion with a concentration gradient with the particles prepared by the methods of Preparation Examples 1 to 8, it is possible to greatly improve the tap density and the electrode density and maintain the C-rate within a desired range, compared with the comparative examples, in which such a mixing was not performed.

### <Embodiments 4 to 7 >

The particle, which was prepared by the method of Preparation Example 1 in such a way that concentrations of all metals have gradients throughout the particle, and the particles prepared by the methods of Preparation Examples 1 to 8 were mixed to each other in mixing ratios shown in the following Table 2, and tap densities, electrode densities, and C-rates thereof were measured. The following Table 2 shows the results of the measurements.

**[Table 2]**

| | First particle (diameter) | Second particle (diameter) | Mixing ratio of first and second particles (wt%) | Tap density | Electrode density | C-rate (5C/0.2C) |
|---|---|---|---|---|---|---|
| Embodiment 4 | Preparation Example 1 (11µm) | Preparation Example 8 (2µm) | 65:35 | 2.77 | 2.45 | 84 % |
| Embodiment 5 | Preparation Example 1 (12µm) | Preparation Example 5 (5µm) | 70:30 | 2.73 | 2.44 | 85 % |
| Embodiment 6 | Preparation Example 1 (13µm) | Preparation Example 2 (6µm) | 90:10 | 2.81 | 2.52 | 87 % |
| Embodiment 7 | Preparation Example 1 (11µm) | Preparation Example 3 (6µm) | 85:15 | 2.79 | 2.50 | 89 % |
| Comparative example 1 | Preparation Example 8 (2µm) | | | 1.13 | 0.96 | 80 % |
| Comparative example 5 | Preparation Example 1 (11µm) | | | 2.42 | 2.15 | 86 % |
| Comparative example 10 | Preparation Example 3 (6µm) | | | 2.17 | 1.92 | 89 % |

Table 2 shows that the particle, in which concentrations of all metals have gradients throughout the particle with the particles prepared by the methods of Preparation Examples 1 to 8, it is possible to greatly improve the tap density and the electrode density and maintain the C-rate within a desired range, compared with the comparative examples, in which such a mixing was not performed.

### <EXPERIMENTAL EXAMPLE> Measurement of a tap density according to a mixing ratio of particles with different sizes

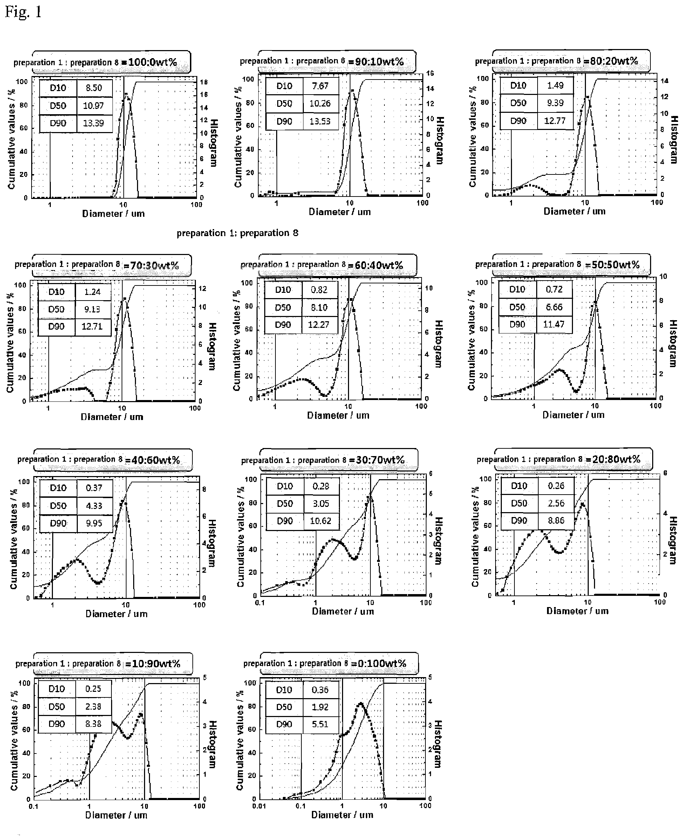

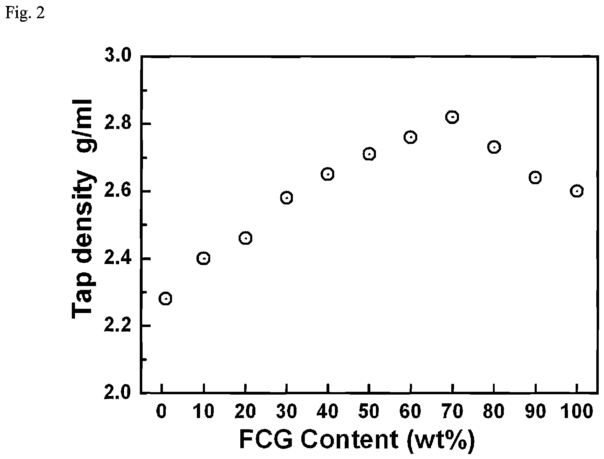

Like the Embodiment 4, the active material, which was prepared by the method of Preparation Example 1 to have a particle size of 11 µm, and the LCO particle, which was prepared by the method of Preparation Example 8 to have a particle size of 2 µm, were mixed with each other in the mixing ratio shown in the following Table 3. FIGS. 1 through 2 and Table 3 shows the results of Particle Size Analysis (PSA) and the tap density according to the mixing ratio.

**[Table 3]**

| Preparation Example 1 (11µm) (wt%) | | 100 | 90 | 80 | 70 | 60 | 50 | 40 | 30 | 20 | 10 | 0 |
|---|---|---|---|---|---|---|---|---|---|---|---|---|
| Preparation Example 8 (2µm) (wt%) | | 0 | 10 | 20 | 30 | 40 | 50 | 60 | 70 | 80 | 90 | 100 |
| PSA | D10 | 8.50 | 7.67 | 1.49 | 1.24 | 0.82 | 0.72 | 0.37 | 0.28 | 0.26 | 0.25 | 0.36 |
| | D50 | 10.97 | 10.26 | 9.39 | 9.13 | 8.10 | 6.66 | 4.33 | 3.05 | 2.56 | 2.38 | 1.92 |
| | D90 | 13.39 | 13.53 | 12.77 | 12.71 | 12.27 | 11.47 | 9.95 | 10.62 | 8.86 | 8.38 | 5.51 |
| Tap density (g/cc) | | 2.60 | 2.64 | 2.73 | 2.82 | 2.76 | 2.71 | 2.65 | 2.58 | 2.46 | 2.40 | 2.28 |

### <EXPERIMENTAL EXAMPLE> Mixing particles with concentrations gradients

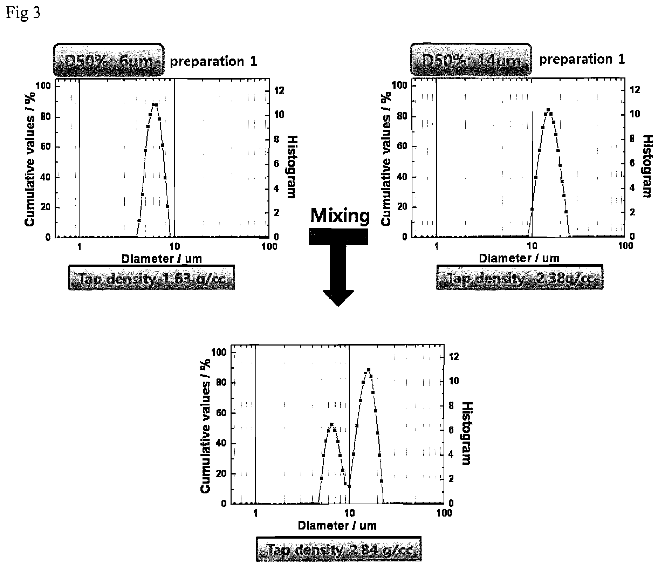

The active material, which was prepared by the method of Preparation Example 1 to have a particle size of 6 µm and have a concentration gradient, and the active material particle, which was prepared by the method of Preparation Example 1 to have a particle size of 14 µm and have a concentration gradient, were mixed with each other, and changes in Particle Size Analysis (PSA) and the tap density were measured. FIG. 3 shows the measurement results.

### <EMBODIMENTS 8 AND 9 >

The particle, which was prepared by the method of Preparation Example 2 in such a way that an Mn concentration was uniform through the particle and Ni and Co concentrations had gradients, and the particles prepared by the methods of Preparation Examples 1 to 8 were mixed to each other in mixing ratios shown in the following Table 4, and tap densities, electrode densities, and C-rates thereof were measured. The following Table 4 shows the results of the measurements.

**[Table 4]**

| | First particle (diameter) | Second particle (diameter) | Mixing ratio of first and second particles (wt%) | Tap density | Electrode density | C-rate (5C/0.2C) |
|---|---|---|---|---|---|---|
| Embodiment 8 | Preparation Example 2 (10µm) | Preparation Example 7 (3µm) | 80:20 | 2.84 | 2.54 | 83 % |
| Embodiment 9 | Preparation Example 2 (11µm) | Preparation Example 3 (6µm) | 85:15 | 2.75 | 2.46 | 88 % |
| Comparative example 7 | Preparation Example 2 (12µm) | | | 2.58 | 2.30 | 85 % |
| Comparative example 10 | Preparation Example 3 (6µm) | | | 2.17 | 1.92 | 89 % |

Table 4 shows that, by mixing the particle, in which the Mn concentration is uniform through the particle and the Ni and Co concentrations have gradients, with the particles prepared by the methods of Preparation Examples 1 to 8, it is possible to greatly improve the tap density and the electrode density and maintain the C-rate within a desired range, compared with the comparative examples, in which such a mixing was not performed.

### <EXPERIMENTAL EXAMPLE> Mixing particles with concentrations gradients

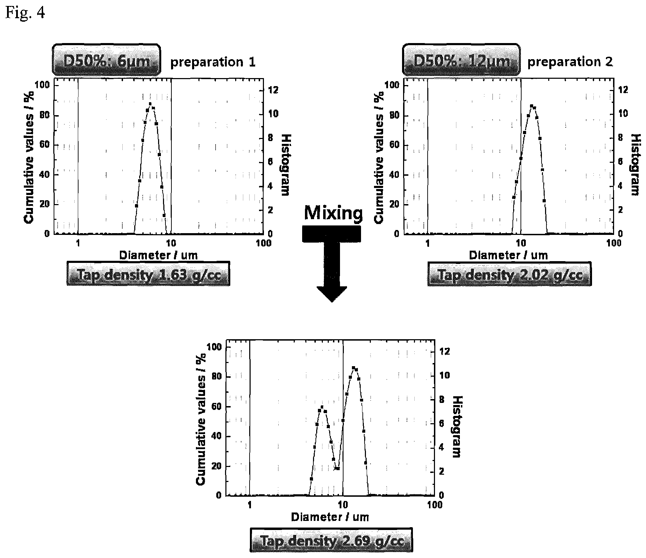

The active material, which was prepared by the method of Preparation Example 1 to have a particle size of 6 µm and have a concentration gradient, and the active material particle, which was prepared by the method of Preparation Example 2 to have a particle size of 12 µm and have a concentration gradient, were mixed with each other, and then, changes in Particle Size Analysis (PSA) and the tap density were measured. FIG. 4 shows the measurement results.

### <EMBODIMENT 10 >

The particle, which was prepared by the method of Preparation Example 2 to contain Mn, Ni, and Co having at least two different concentration gradients throughout the particle, and the particles prepared by the methods of Preparation Examples 1 to 8 were mixed with each other in the mixing ratio shown in the following Table 5, and then, tap densities, electrode densities, and C-rates thereof were measured. The following Table 5 shows the results of the measurements.

**[Table 5]**

| | First particle (diameter) | Second particle (diameter) | Mixing ratio of first and second particles (wt%) | Tap density | Electrode density | C-rate (5C/0.2C) |
|---|---|---|---|---|---|---|
| Embodiment 10 | Preparation Example 3 (10µm) | Preparation Example 6 (5µm) | 90:10 | 2.71 | 2.42 | 85 % |
| Comparative example 2 | Preparation Example 6 (5µm) | | - | 1.67 | 1.46 | 76 % |
| Comparative example 6 | Preparation Example 1 (5µm) | | - | 1.97 | 1.74 | 88 % |
| Comparative example 8 | Preparation Example 2 (5µm) | | - | 2.03 | 1.79 | 87 % |
| Comparative example 9 | Preparation Example 3 (12µm) | | - | 2.52 | 2.25 | 87 % |
| Comparative example 10 | Preparation Example 3 (6µm) | | - | 2.17 | 1.92 | 89 % |

Table 5 shows that, by mixing the particle, in which Mn, Ni, and Co are contained to have at least two different concentration gradients throughout the particle, with the particles prepared by the methods of Preparation Examples 1 to 8, it is possible to greatly improve the tap density and the electrode density and maintain the C-rate within a desired range, compared with the comparative examples, in which such a mixing was not performed.

### INDUSTRIAL APPLICABILITY

According to example embodiments of the inventive concept, the cathode active material may be formed in such a way that particles of different sizes are mixed with each other and at least one of the mixed particles has a gradient in concentration of metal ions, and thus, it is possible to improve a C-rate property and maintain porosity within a desired range, and thus, the cathode active material can be manufactured to have a remarkably improved tap density.

## Claims

1. A cathode active material for a lithium secondary battery, comprising a mixture of a particle P1 with an average diameter of D1 and a particle P2 with an average diameter of D2,
wherein D1 > D2,
wherein the particle P1 and the particle P2 has a core portion and a surface portion,
wherein the core portion of the particle P1 and the particle P2 has a chemical composition represented by the following chemical formula 1,
wherein the surface portion of the particle P2 has a chemical composition represented by the following chemical formula 2,
[chemical formula 1] Liₐ₁M1ₓ₁M2_{y1}M3_{z1}M4_{w}O_{2+δ},
[chemical formula 2] Liₐ₂M1ₓ₂M2_{y2}M3_{z2}M4_{w}O_{2+δ},
and
in the chemical formulas 1 and 2, M1, M2, and M3 are selected from the group consisting of Ni, Co, Mn, and combinations thereof, M4 is selected from the group consisting of Fe, Na, Mg, Ca, Ti, V, Cr, Cu, Zn, Ge, Sr, Ag, Ba, Zr, Nb, Mo, Al, Ga, B, and combinations thereof, 0<a1≤1.1, 0<a2<1.1, 0≤x1≤1, 0≤x2≤1, 0≤y1≤1, 0≤y2≤1, 0≤z1≤1, 0≤z2≤1, 0≤w≤0.1, 0.0≤δ≤0.02, 0<x1+y1+z1≤1, 0<x2+y2+z2≤1, x1≤x2, y1≤y2, and z2≤z1,
wherein the Ni concentration of the core portion of the particle P1 is higher than the Ni concentration of the core portion of the particle P2.

2. The cathode active material of claim 1, wherein the average diameters D1 and D2 range from 2 to 20 µm.

3. The cathode active material of claim 2, wherein the particle P1 is contained to have a weight percent of 5 to 95 with respect to a total weight of an active material.

4. The cathode active material of claim 1, wherein a thickness of the core portion ranges from 10% to 70% of a total size of the particle of the cathode active material for the lithium secondary battery, and
a concentration of metal ion from the core portion to the surface portion is uniformly represented by the chemical formula 2.

5. The cathode active material of claim 1, wherein a thickness of the core portion ranges from 10% to 70 % of a total size of the particle of the cathode active material for the lithium secondary battery,
a thickness of the surface portion ranges from 1% to 5 % of the total size of the particle of the cathode active material for the lithium secondary battery, and
concentrations of M1, M2, and M3 have continuous concentration gradients in a direction from the core portion to the surface portion.

6. The cathode active material of claim 1, wherein a thickness of the core portion and a thickness of the surface portion range from 1% to 5% of a total size of the particle of the cathode active material for the lithium secondary battery, and
concentrations of M1, M2, and M3 have continuous concentration gradients in a direction from the core portion to the surface portion.

7. The cathode active material of claim 6, wherein the concentrations of M1 and M2 have continuously increasing concentration gradients in the direction from the core portion to the surface portion, and
the concentration of M3 has continuously decreasing concentration gradient in the direction from the core portion to the surface portion.

8. The cathode active material of claim 1, wherein a thickness of the core portion and a thickness of the surface portion range from 1% to 5% of a total size of the particle of the cathode active material for the lithium secondary battery,
a concentration of M1 is uniform in a direction from the core portion to the surface portion, and
concentrations of M2 and M3 have continuous concentration gradients in the direction from the core portion to the surface portion.

9. The cathode active material of claim 1, wherein the M1 is Co, the M2 is Mn, and the M3 is Ni.

10. The cathode active material of claim 1, wherein the particle P1 comprises Ni, Co, and Mn, and
Ni, Co, and Mn have concentration gradients throughout the particle P1.

11. The cathode active material of claim 1, wherein the concentration of at least two of Ni, Co, and Mn have at least two different gradients throughout the particle P1.

12. An electrode comprising the cathode active material for the lithium secondary battery of claim 1.

13. A lithium secondary battery comprising the electrode of claim 12.

## Patentansprüche

1. Kathodenaktivmaterial für eine Lithiums-Sekundärbatterie, umfassend eine Mischung eines Partikels P1 mit einem durchschnittlichen Durchmesser von D1 und eines Partikels P2 mit einem durchschnittlichen Durchmesser von D2,
wobei D1 > D2,
wobei das Partikel P1 und das Partikel P2 ein Kernteil und ein Oberflächenteil aufweist, wobei das Kernteil des Partikels P1 und des Partikels P2 eine chemische Zusammensetzung aufweist, die durch die folgende chemische Formel 1 dargestellt wird,
wobei das Oberflächenteil des Partikels P2 eine chemische Zusammensetzung aufweist, die durch die folgende chemische Formel 2 dargestellt wird,
[chemische Formel 1] LiₐiM1ₓ₁M2_{y1}M3_{z1}M4_{w}O_{2+δ},
[chemische Formel 2] Liₐ₂M1ₓ₂M2_{y2}M3_{z2}M4_{w}O_{2+δ},
und
in den chemischen Formeln 1 und 2, M1, M2, und M3 ausgewählt sind aus der Gruppe bestehend aus Ni, Co, Mn, und Kombinationen davon, M4 ausgewählt ist aus der Gruppe bestehend aus and Fe, Na, Mg, Ca, Ti, V, Cr, Cu, Zn, Ge, Sr, Ag, Ba, Zr, Nb, Mo, Al, Ga, B, und Kombinationen davon, 0<a1≤1,1, 0<a2≤1,1, 0≤x1≤1, 0≤x2≤1, 0≤y1<1, 0≤y2≤1, 0≤z1≤1, 0≤z2≤1, 0≤w≤0,1, 0,0≤δ≤0,02, 0≤x1+y1+z1≤1, 0<x2+y2+z2≤1, x1≤x2, y1≤y2, und z2≤z1,
wobei die Ni-Konzentration des Kernteils des Partikels P1 höher ist als die Ni-Konzentration des Kernteils des Partikels P2.

2. Kathodenaktivmaterial nach Anspruch 1, wobei die durchschnittlichen Durchmesser D1 und D2 im Bereich von 2 bis 20 µm liegen.

3. Kathodenaktivmaterial nach Anspruch 2, wobei das Partikel P1 mit einem Gewichtsprozentanteil von 5 bis 95 in Bezug auf das Gesamtgewicht eines Aktivmaterials enthalten ist.

4. Kathodenaktivmaterial nach Anspruch 1, wobei eine Dicke des Kernteils im Bereich von 10 % bis 70 % einer Gesamtgröße des Partikels des Kathodenaktivmaterials für die Lithium-Sekundärbatterie liegt, und
eine Konzentration von Metallionen vom Kernteil zum Oberflächenteil einheitlich durch die chemische Formel 2 dargestellt wird.

5. Kathodenaktivmaterial nach Anspruch 1, wobei eine Dicke des Kernteils im Bereich von 10 % bis 70 % einer Gesamtgröße des Partikels des Kathodenaktivmaterials für die Lithium-Sekundärbatterie liegt,
eine Dicke des Oberflächenteils im Bereich von 1 % bis 5 % der Gesamtgröße des Partikels des Kathodenaktivmaterials für die Lithium-Sekundärbatterie liegt, und
Konzentrationen von M1, M2 und M3 kontinuierliche Konzentrationsgradienten in einer Richtung vom Kernteil zum Oberflächenteil aufweisen.

6. Kathodenaktivmaterial nach Anspruch 1, wobei eine Dicke des Kernteils und eine Dicke des Oberflächenteils im Bereich von 1 % bis 5 % einer Gesamtgröße des Partikels des Kathodenaktivmaterials für die Lithium-Sekundärbatterie liegt, und
Konzentrationen von M1, M2 und M3 kontinuierliche Konzentrationsgradienten in einer Richtung vom Kernteil zum Oberflächenteil aufweisen.

7. Kathodenaktivmaterial nach Anspruch 6, wobei die Konzentrationen von M1 und M2 kontinuierlich zunehmende Konzentrationsgradienten in der Richtung vom Kernteil zum Oberflächenteil aufweisen, und
die Konzentration von M3 einen kontinuierlich abnehmenden Konzentrationsgradienten in der Richtung vom Kernteil zum Oberflächenteil aufweist.

8. Kathodenaktivmaterial nach Anspruch 1, wobei eine Dicke des Kernteils und eine Dicke des Oberflächenteils im Bereich von 1 % bis 5 % einer Gesamtgröße des Partikels des Kathodenaktivmaterials für die Lithium-Sekundärbatterie liegt,
eine Konzentration von M1 in einer Richtung vom Kernteil zum Oberflächenteil gleichförmig ist, und
Konzentrationen von M2 und M3 kontinuierliche Konzentrationsgradienten in der Richtung vom Kernteil zum Oberflächenteil aufweisen.

9. Kathodenaktivmaterial nach Anspruch 1, wobei das M1 Co ist, das M2 Mn ist und das M3 Ni ist.

10. Kathodenaktivmaterial nach Anspruch 1, wobei das Partikel P1 Ni, Co und Mn umfasst, und
Ni, Co und Mn Konzentrationsgradienten im gesamten Partikel P1 aufweisen.

11. Kathodenaktivmaterial nach Anspruch 1, wobei die Konzentration von mindestens zwei von Ni, Co und Mn mindestens zwei unterschiedliche Gradienten im gesamten Partikel P1 aufweisen.

12. Elektrode umfassend das Kathodenaktivmaterial für die Lithium-Sekundärbatterie nach Anspruch 1.

13. Lithium-Sekundärbatterie umfassend die Elektrode nach Anspruch 12.

## Revendications

1. Matériau actif de cathode pour batterie secondaire au lithium, comprenant un mélange d'une particule P1 de diamètre moyen D1 et d'une particule P2 de diamètre moyen D2,
dans lequel D1 > D2,
dans lequel la particule P1 et la particule P2 ont une partie centrale et une partie de surface,
dans lequel la partie centrale de la particule P1 et de la particule P2 a une composition chimique représentée par la formule chimique suivante 1,
dans lequel la partie de surface de la particule P2 a une composition chimique représentée par la formule chimique suivante 2,
[formule chimique 1] Liₐ₁M1ₓ₁M2_{y1}M3_{z1}M4_{w}O_{2+δ},
[formule chimique 2] Liₐ₂M1ₓ₂M2_{y2}M3_{z2}M4_{w}O_{2+δ},
et
dans les formules chimiques 1 et 2, M1, M2 et M3 sont choisis dans le groupe constitué de Ni, Co, Mn et leurs combinaisons, M4 est choisi dans le groupe constitué de Fe, Na, Mg, Ca, Ti, V, Cr, Cu, Zn, Ge, Sr, Ag, Ba, Zr, Nb, Mo, Al, Ga, B et leurs combinaisons, 0<a1≤1.1, 0<a2<1.1, 0≤x1≤1, 0≤x2≤1, 0≤y1≤1, 0≤y2≤1, 0≤z1≤1, 0≤z2≤1, 0≤w≤0.1, 0.0≤δ≤0.02, 0<x1+y1+z1≤1, 0<x2+y2+z2≤1, x1≤x2, y1≤y2, et z2≤z1,
la concentration en Ni de la partie centrale de la particule P1 étant supérieure à la concentration en Ni de la partie centrale de la particule P2.

2. Matériau actif de cathode selon la revendication 1, dans lequel les diamètres moyens D1 et D2 vont de 2 à 20 µm.

3. Matériau actif de cathode selon la revendication 2, dans lequel la particule P1 est contenue pour avoir un pourcentage en poids de 5 à 95 par rapport au poids total d'un matériau actif.

4. Matériau actif de cathode selon la revendication 1, dans lequel l'épaisseur de la partie centrale va de 10% à 70% de la taille totale de la particule du matériau actif de cathode pour batterie secondaire au lithium, et
une concentration en ions métalliques de la partie centrale à la partie de surface est représentée uniformément par la formule chimique 2.

5. Matériau actif de cathode selon la revendication 1, dans lequel l'épaisseur de la partie centrale va de 10% à 70% de la taille totale de la particule du matériau actif de cathode pour batterie secondaire au lithium,
l'épaisseur de la partie de surface va de 1% à 5% de la taille totale de la particule du matériau actif de cathode pour batterie secondaire au lithium, et
les concentrations de M1, M2 et M3 ont des gradients de concentration continus dans une direction allant de la partie centrale à la partie de surface.

6. Matériau actif de cathode selon la revendication 1, dans lequel une épaisseur de la partie centrale et une épaisseur de la partie de surface sont comprises entre 1% et 5% de la taille totale de la particule du matériau actif de cathode pour batterie secondaire au lithium, et
les concentrations de M1, M2 et M3 ont des gradients de concentration continus dans une direction allant de la partie centrale à la partie de surface.

7. Matériau actif de cathode selon la revendication 6, dans lequel les concentrations de M1 et M2 ont des gradients croissants de manière continue dans la direction allant de la partie centrale à la partie de surface, et
la concentration de M3 a un gradient de concentration décroissant de manière continue dans la direction allant de la partie centrale à la partie de surface.

8. Matériau actif de cathode selon la revendication 1, dans lequel une épaisseur de la partie centrale et une épaisseur de la partie de surface sont comprises entre 1% et 5% de la taille totale de la particule du matériau actif de cathode pour batterie secondaire au lithium,
une concentration de M1 est uniforme dans une direction allant de la partie centrale à la partie de surface, et
les concentrations de M2 et de M3 ont des gradients de concentration continus dans la direction allant de la partie centrale à la partie de surface.

9. Matériau actif de cathode selon la revendication 1, dans lequel M1 est Co, M2 est Mn et M3 est Ni.

10. Matériau actif de cathode selon la revendication 1, dans lequel la particule P1 comprend Ni, Co et Mn, et
Ni, Co et Mn ont des gradients de concentration dans toute la particule P1.

11. Matériau actif de cathode selon la revendication 1, dans lequel la concentration d'au moins deux parmi Ni, Co et Mn a au moins deux gradients différents dans toute la particule P1.

12. Electrode comprenant le matériau actif de cathode pour la batterie secondaire au lithium selon la revendication 1.

13. Batterie secondaire au lithium comprenant l'électrode selon la revendication 12.
